# EUROPÄISCHE PATENTSCHRIFT

(11) **EP 3 344 825 B1**
(45) Veröffentlichungstag und Bekanntmachung des Hinweises auf die Patenterteilung: **07.08.2019**
(21) Anmeldenummer: 16767137.9
(22) Anmeldetag: 31.08.2016
(51) Int. Cl.: E04C 1/42, E04C 2/54

(54) **BAUELEMENT AUS HOHLGLASBAUSTEINEN**
COMPONENT MADE OF HOLLOW GLASS BLOCKS
ÉLÉMENT DE CONSTRUCTION COMPOSÉ DE BRIQUES CREUSES EN VERRE

(30) Priorität: 31.08.2015 CH 12512015
(43) Veröffentlichungstag der Anmeldung: 11.07.2018
(73) Patentinhaber: Semadeni, Marco, 8816 Hirzel (CH)
(72) Erfinder: Semadeni, Marco, 8816 Hirzel (CH)
(74) Vertreter: Luchs, Willi
(86) Internationale Anmeldenummer: PCT/EP2016/001465
(87) Internationale Veröffentlichungsnummer: WO 2017/036593

(56) Entgegenhaltungen:
- EP-A1- 1 447 491
- EP-A2- 0 103 192
- AT-B- 200 308
- DE-A1- 2 263 127
- DE-U1- 29 721 211

## Beschreibung

Die Erfindung betrifft ein Bauelement für den Aufbau aus Hohlglasbausteinen mit Mörtel oder Beton und gegebenenfalls einer geeigneten Armierung.

Bauelemente dieser Art dienen als Verglasungselemente für horizontale, geneigte oder vertikale Glaseinbauten als Raumabschluss in Dächer- und Deckenöffnungen oder Fassaden. Es ist bei den bisher bekannten Bauelementen dieser Art von Nachteil, dass sie schlechte bauphysikalische Eigenschaften sowie auch schlechte U- und G-Werte aufweisen. Zudem ergibt sich mit ihnen eine Konstruktion mit vielen potentiellen Schwachstellen, wie etwa die Kleb- oder Schweissstellen bei wärmegedämmten Glasbausteinverbindungen, sowie auch Gummidichtungen, Stösse, Überlappungen und aufgesetzte Wetterschenkelbleche, die für das Eindringen von Wasser kritisch sind.

Weitere Nachteile sind schlecht isolierender Beton und Mörtel, sowie auch die Glasbausteine selbst, die als Hohlkörper die Wärme über ihre Glaswandungen leiten und über die unbehandelte Pressglaseigenschaft der Glasbausteine direkt Strahlungswärme hindurchlassen.

Aufgrund der kleinen Flächeneinheit und des heterogenen statischen Verbundes mit dem Beton/Mörtel und der Armierung ist es daher schwierig, Bauelemente der eingangs genannten Art herzustellen, die eine gute Wärme- und Sonnenschutzisolierung aufweisen und gleichzeitig der statischen Kraftübertragung über längere Zeiträume ohne Schaden standhalten. Schäden treten in der Regel dadurch auf, dass die Glasbausteine als Pressglashohlkörper undicht werden und Kondensat aufnehmen, womit ihre optischen und bauphysikalischen Eigenschaften verloren gehen.

Im Unterschied zu Isoliergläsern aus Flachglas sind die Flächengrössen bei Glasbausteinen aus Pressglas um ein Vielfaches geringer, sodass nur ein Zusammenwirken des heterogenen Gesamtsystems über eine sehr grosse Bautiefe zu guten bauphysikalischen Werten führen kann.

In der Druckschrift DE-U-297 21 211 ist ein Glassteinelement für einschalige Wandteile aus zwei Hohlglassteinen offenbart, die entlang einer eine Sichtfläche bildenden Wand mittels einer Klebemasse zu einer Einheit miteinander verbunden sind. Bei einer Variante ist zwischen den Glassteinhalbschalen eine Trennwand aus einer Glasscheibe angeordnet. Die Glassteinhalbschalen und die Glasscheibe sind mittels eines wasserdampfdiffusionsdichten Klebers miteinander verbunden.

Versuche mit diesen besser isolierenden Glasbausteinen mit der direkten Verklebung von Glasbaustein auf Glasbaustein mit eventuell eingeklebter Glasscheibe herzustellen, sind gescheitert, da die statische Belastung eines aus solchen Glasbausteinen hergestellten Bauelements die Verklebung undicht werden lässt, und die wärmeisolierenden Eigenschaften sehr gering sind. Darüber hinaus ist es bei ihm erforderlich, die vorkommenden mannigfaltigen Übergänge gegen Wasser abzudichten und sie auch über längere Zeiträume dicht zu halten.

Gemäss der Druckschrift EP-A-1 447 491 ist ein Satz von Glashohlbausteinen umfassend mindestens zwei Glashohlbausteine, die einander gegenüberliegende Sichtstirnflächen und eine Seitenfläche aufweisen. Die Stirnfläche eines Bausteins ist mit einem auf einem Aussenrand umlaufenden Wulst versehen, der in direktem Kontakt mit einem umlaufenden Wulst der Stirnfläche des anderen Bausteins steht. Es ist dabei ein Hohlraum gebildet, der sich zwischen den Stirnflächen befindet, und die Bausteine sind dabei durch ein diese umgebendes Verbindungselement aneinandergeklebt. Es kann ausserdem eine Glasplatte zwischen diese Glashohlbausteine gelegt sein. Bei diesem Satz von Glashohlbausteinen wird mit der Anordnung der sich aneinander berührenden Steine ohne oder mit einer Glasplatte dazwischen im montierten Zustand eine durch die Glaskörper gehende Kältebrücke geschaffen.

Der Erfindung liegt die Aufgabe zugrunde, diese Nachteile zu vermeiden und ein Bauelement der eingangs genannten Art zu schaffen, das eine einfache Konstruktion aufweist und dabei eine dauerhaft sichere Abdichtung mit hochwertigen bauphysikalischen Eigenschaften gewährleistet.

Diese Aufgabe ist erfindungsgemäss durch das Bauelement gemäss Anspruch 1 gelöst.

Das erfindungsgemässe Bauelement erhält dadurch eine verhältnismässig grosse Bautiefe, die trotz der geringen Flächengrösse der Glasbausteine sehr gute Isolationswerte sicherstellt. Die grosse Bautiefe des Bauelements bewirkt auch eine Steigerung seines Flächenträgheitsmoments auf Biegung, welches wiederum hohe Anteile von Isoliermörtel/- beton zulässt und grösser dimensionierte Bauelemente ermöglicht.

Die Abstandhalterung zwischen den Hohlglasbausteinen besteht vorzugsweise aus mehreren einzelnen Abstandhaltern, die voneinander durch dazwischenliegende Folien mit Beschichtungen getrennt sind. Die Folien mit Beschichtungen können auch Glasscheiben sein. Folien haben aber gegenüber Gläsern den Vorteil einer wesentlich geringeren Wärmeleitung von der Mitte des Hohlraums in den Randverbund der Abstandhalterung. Die Beschichtungen der Folien dienen dabei als Wärme- und/oder Sonnenschutz.

Die einzelnen Abstandhalter sind erfindungsgemäss als rahmenförmige Hohlprofile ausgebildet, die an ihrem Außenumfang mit einer vorgesehenen Beschichtung, welche gas- und wasserdampfdicht ist, versehen sind. Dabei sind die Hohlprofile mit einem feuchtigkeitsabsorbierenden Material gefüllt. Zum Abdichten des Hohlraums zwischen den Glasbausteinen ist zwischen den einzelnen Abstandhaltern sowie zwischen ihnen und den Glasbausteinen eine Primärdichtung aus Butyl oder ähnlichen Werkstoffen vorgesehen. Eine Sekundärabdichtung aus Silikon oder einem ähnlichen Werkstoff ist sowohl aussen an den einzelnen Abstandhaltern als auch zwischen den Glasbausteinrändern angebracht, welche das Abstandhaltersystem abdichtet und es gegen statische/mechanische Einwirkungen schützt, die im gesamten Bauelement entstehen können.

Um die Wärmeleitung zu verringern, kann der durch die Abstandhalterung gebildete Hohlraum zusätzlich mit Edelgas gefüllt werden. Es kann auch vorteilhaft sein, wenn im Hohlraum der Glasbausteine ein Vakuum erzeugt wird.

Die Erfindung sieht ferner vor, dass gegen das Äussere des Raumabschlusses vorzugsweise Mörtel oder Beton verwendet wird, während gegen das Innere des Raumabschlusses Isoliermörtel oder Isolierbeton bestehend aus geschlossenporig geschäumten Glaskugeln aufgebracht wird. Auf diese Weise kann die Wärmeleitung von aussen in den Innenraum verhindert werden.

Es ist dabei zweckmässig, im Mörtel/Beton und/oder im Isoliermörtel/-beton eine parallel zur Oberfläche des Bauelements respektive der Ebene des Raumabschlusses in der Ebene liegende Armierung vorzusehen. An der Armierung können Ankerhülsen oder ähnliche Befestigungselemente angebracht werden. Es ist aber auch möglich, die Armierung direkt mit dem Gebäude zu befestigen. Das Mörtel/Betonsystem mit Armierung stabilisiert das Abstandhaltersystem auf Innendruck.

Der vorstehend beschriebene Aufbau des Bauelements ist so ausgelegt, dass dieser statische Einflüsse wie Krafteinwirkungen oder Bewegungen mitmachen kann, ohne dass das Abstandhaltersystem defekt geht oder undicht wird. Das erfindungsgemässe Abstandhaltersystem ist derart stabil, dass er zur Statik des gesamten Bauelements beiträgt und die Stabilisierung des heterogenen Verbundes unterstützt.

Die Erfindung wird nachfolgend anhand eines Ausführungsbeispiels unter Bezugnahme auf die Zeichnung näher erläutert. Es zeigt:

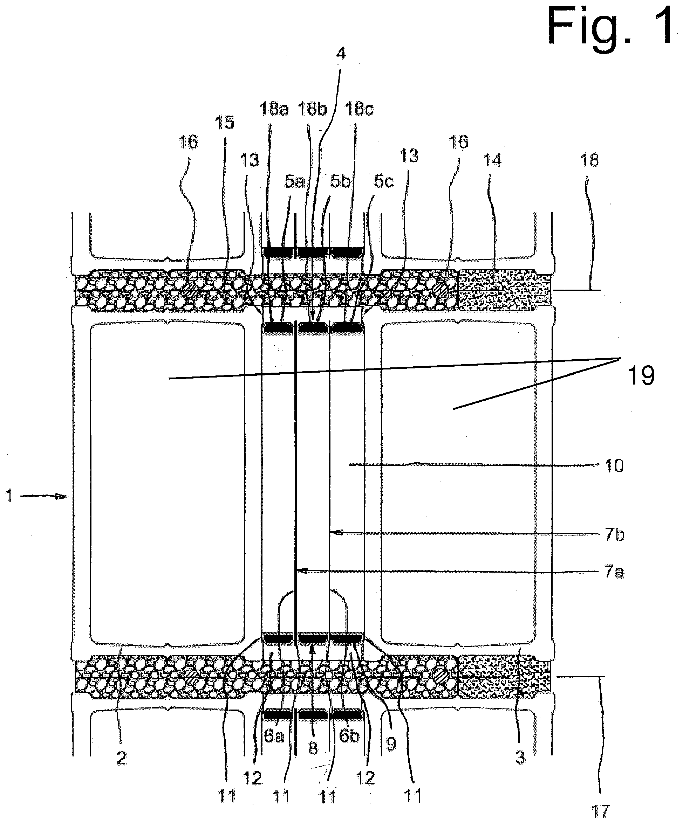

- Fig. 1: einen Querschnitt durch ein erfindungsgemässes Bauelement.

Die in Fig. 1 dargestellten Bauelemente 1 weisen jeweils zwei gleichförmig ausgebildete Hohlglasbausteine 2, 3 auf, welche bei Aussenfassaden bzw. Aussenwänden oder auch Innenwänden von Bauten aller Art wie ein Mauerwerk auf bekannte Weise verwendet werden. Genauso eignen sich diese Hohlglasbausteine bei Böden oder Dächern von Bauten, um bei diesen eine Lichtdurchlässigkeit zu ermöglichen. Die Elementränder bilden vorteilhaft Symmetrieachsen 17, 18 der Bauelemente 1 zueinander.

Erfindungsgemäss besteht dieses Bauelement 1 aus vorzugsweise zwei gleichförmig ausgebildeten Hohlglasbausteinen 2, 3 mit einer dazwischen liegenden Abstandhalterung 4, die den Zwischenraum abdichtet und gleichzeitig bewirkt, dass die Bautiefe des Bauelements 1 vergrössert wird.

Die Abstandhalterung 4 setzt sich aus drei einzelnen als Hohlprofile ausgebildeten Abstandhaltern 5a, 5b 5c zusammen, die voneinander durch dazwischenliegende Kunststofffolien 6a, 6b mit als Wärme- und/oder Sonnenschutz dienenden Beschichtungen 7a, 7b getrennt sind. Die Abstandhalter 5a, 5b 5c sind an ihrem Außenumfang 8 mit einer nach aussen vorgesehenen Beschichtung 9 versehen, die gas- und wasserdampfdicht ist.

Zum Abdichten des Hohlraums 10 zwischen den Glasbausteinen 2, 3 befindet sich zwischen den einzelnen Abstandhaltern 5a, 5b 5c sowie zwischen ihnen und den Glasbausteinen 2, 3 eine Primärabdichtung 11 aus Butyl oder einem ähnlichen Werkstoff. Eine Sekundärabdichtung 12 aus Silikon oder einem ähnlichen Werkstoff ist sowohl aussen an den einzelnen Abstandhaltern 5a, 5b, 5c als auch zwischen den Glasbausteinrändern 13 angebracht, welche das Abstandhaltersystem 4 abdichtet und es gegen statische/mechanische Einwirkungen wirksam schützt. Zur nachhaltigen Entfeuchtung des Hohlraumes 10 können die Innenräume 18a, 18b, 18c mit einem Entfeuchtungsmittel gefüllt sein.

Zur Verringerung der Wärmeleitung kann der durch die Abstandhalter 5a, 5b 5c gebildete Hohlraum 10 zusätzlich mit Edelgas wie beispielsweise Krypton gefüllt werden.

Das Bauelement 1 ist oben und unten mit einer Mörtel/Betonschicht abgeschlossen, wobei gegen das Äussere des Raumabschlusses Mörtel oder Beton 14 verwendet wird, während gegen das Innere des Raumabschlusses Isoliermörtel oder Isolierbeton 15, bestehend aus geschlossen porig geschäumten Glaskugeln aufgebracht wird. Damit wird verhindert, dass die Mörtel/Betonschicht 14, 15 Wärme von aussen in den Innenraum des Gebäudes oder umgekehrt leiten kann.

In dieser Schicht ist eine parallel zur Oberfläche des Bauelements 1 respektive der Ebene des Raumabschlusses in der Ebene liegende Armierung 16 angeordnet. An der Armierung 16 können Ankerhülsen oder ähnliche Befestigungselemente angebracht werden. Die Armierung kann auch direkt im Anschlussbauteil verankert sein.

Beim beschriebenen Ausführungsbeispiel besteht die Abstandhalterung 4 aus drei einzelnen Abstandhaltern 5a bis 5c. Es ist aber auch ohne weiteres im Rahmen der Erfindung möglich, je nach Dimension und/oder Einsatzbestimmungen des Bausteins eine Abstandhalterung mit weniger oder aber mit mehr als drei Einzelabstandhaltern vorzusehen. Diese könnten auch mit unterschiedlichen Dicken versehen sein.

Beim beschriebenen Ausführungsbeispiel sind die beiden Hohlglasbausteine 2, 3 gleichförmig ausgebildet. Die Erfindung lässt sich aber auch bei Bauelementen realisieren, deren Glasbausteine insbesondere hinsichtlich ihrer Bautiefe unterschiedlich bemessen sind.

Zur besseren Isolation des Bauteils kann im Hohlraum 19 der Glasbausteine 2 und/oder 3 ein Vakuum erzeugt sein. Als Mörtel oder Beton 14 bzw. als Isoliermörtel oder Isolierbeton 15 können im Rahmen der Erfindung andere bekannte Materialien als oben erwähnt verwendet werden.

## Patentansprüche

1. Bauelement für den Aufbau eines Mauerwerks aus Hohlglasbausteinen vorzugsweise mit Mörtel oder Beton und gegebenenfalls einer geeigneten Armierung, wobei das Bauelement (1) zwei Hohlglasbausteine (2, 3) aufweist, die nebeneinander angeordnet und vorzugsweise gleichförmig ausgebildet sind, wobei sich das Bauelement aus den Hohlglasbausteinen (2, 3) mit einer dazwischenliegenden Abstandhalterung (4), die den Zwischenraum abdichtet, zusammensetzt, **dadurch gekennzeichnet, dass**
die Abstandhalterung (4) aus mindestens einem einzelnen Abstandhalter (5a, 5b, 5c) besteht, welcher jeweils als ein rahmenförmiges Hohlprofil ausgebildet ist, das mit einer an seinem Aussenumfang vorgesehenen gas- und wasserdichten Beschichtung (9) versehen und zwischen ihm und den Hohlglasbausteinen (2, 3) je eine Primärabdichtung (11) vorgesehen ist.

2. Bauelement nach Anspruch 1, **dadurch gekennzeichnet, dass** die Abstandhalterung (4) aus mehreren einzelnen Abstandhaltern (5a, 5b, 5c) besteht, die voneinander durch dazwischenliegende Folien (6a, 6b) mit Beschichtungen (7a, 7b) getrennt sind.

3. Bauelement nach Anspruch 2, **dadurch gekennzeichnet, dass** anstelle der Folien (6a, 6b) Glasscheiben einsetzbar sind.

4. Bauelement nach Anspruch 2 oder 3, **dadurch gekennzeichnet, dass** zwischen den einzelnen Abstandhaltern (5a, 5b, 5c) sowie zwischen ihnen und den Hohlgasbausteinen (2, 3) eine Primärabdichtung (11) aus Butyl oder einem ähnlichen Werkstoff vorgesehen ist.

5. Bauelement nach Anspruch 2, **dadurch gekennzeichnet, dass** sowohl aussen an den einzelnen Abstandhaltern (5a, 5b, 5c) als auch zwischen den Glasbausteinrändern (13) eine Sekundärabdichtung (12) aus Silikon oder einem ähnlichen Werkstoff vorgesehen ist.

6. Bauelement nach einem der vorhergehenden Ansprüche 1 bis 5, **dadurch gekennzeichnet, dass** der durch die Abstandhalterung (4) gebildete Hohlraum (10) mit Edelgas gefüllt oder in diesem ein Vakuum erzeugt ist.

7. Bauelement nach einem der vorhergehenden Ansprüche 1 bis 6, **dadurch gekennzeichnet, dass** gegen das Äussere des Raumabschlusses Mörtel oder Beton (14), während gegen das Innere des Raumabschlusses Isoliermörtel oder Isolierbeton (15) bestehend aus geschlossenporig geschäumten Glaskugeln verwendbar sind, um zu verhindern, dass der Mörtel oder Beton (14) Wärme von aussen in den Innenraum des Gebäudes oder umgekehrt leiten kann.

8. Bauelement nach Anspruch 7, **dadurch gekennzeichnet, dass** im Mörtel/Beton (14) und/oder im Isoliermörtel/-beton (15) eine parallel zur Oberfläche des Bauelements respektive der Ebene des Raumabschlusses in der Ebene liegende Armierung (16) vorgesehen ist.

9. Bauelement nach Anspruch 8, **dadurch gekennzeichnet, dass** an der Armierung (16) Ankerhülsen befestigbar sind.

10. Bauelement nach Anspruch 8, **dadurch gekennzeichnet, dass** die Armierung (16) direkt mit dem Gebäude befestigbar ist.

## Claims

1. A component for constructions of a masonry construction made of hollow glass blocks preferably using mortar or concrete and optionally a suitable reinforcement, whereas the component (1) having two hollow glass blocks (2, 3), which are disposed side by side and preferably are designed identically, whereas the component consists of the hollow glass blocks (2 ,3) with an intermediate lying spacer system (4), which seals the intermediate space, **characterised in that** the spacer system (4) consists of at least one individual spacer system (5a, 6b, 5c), each of which consisting as a frame shaped hollow profile, which is provided in its external circumference with a gas- and water vapour-tight coating (9) and between him and the hollow glass blocks (2, 3) is provided respectively one primary seal (11).

2. The component according to Claim 1, **characterised in** the spacer system (4) consists of a number of individual spacers (5a, 5b, 5c) which are separated from one another by intermediate films (6a, 6b) with coatings (7a, 7b).

3. The component according to Claim 2, **characterised in that** panes of glass may be used instead of the films (6a, 6b).

4. The component according to Claim 2 or 3, **characterised in that** a primary seal (11) made of butyl or a similar material is provided between the individual spacers (5a, 5b, 5c) and between them and the hollow glass blocks (2, 3).

5. The component according to Claim 2, **characterised in that** a secondary seal (12) made of silicone or a similar material is provided on the outside on the individual spacers (5a, 5b, 5c) as well as between the glass block edges (13).

6. The component according to any of the preceding Claims 1 to 5, **characterised in that** the cavity (10) formed by the spacer system (4) is filled with inert gas or a vacuum is generated therein.

7. The component according to any of the preceding Claims 1 to 6, **characterised in that** mortar or concrete (14) can be used towards the outside of the room closing element, whereas insulating mortar or insulating concrete (15) made of closed-pore foamed glass beads can be used towards the inside of the room closing element, for preventing, that the mortar or concrete (14) can conduct of heat from the outside to the interior or vice versa.

8. The component according to Claim 7, **characterised in that** a reinforcement (16) lying in the plane parallel to the surface of the component as well as to the plane of the room closing element is provided within the mortar/concrete (14) and/or within the insulating mortar/concrete (15).

9. The component according to Claim 8, **characterised in that** anchoring sleeves can be fastened to the reinforcement (16).

10. The component according to Claim 8, **characterised in that** the reinforcement (16) can be fastened directly to the building.

## Revendications

1. Elément de construction pour la construction d'une maçonnerie en briques creuses en verre, de préférence avec du mortier et du béton et, le cas échéant, une armature appropriée, l'élément (1) de construction ayant deux briques (2, 3) creuses en verre, qui sont disposées l'une à côté de l'autre et qui ont, de préférence, la même forme, l'élément de construction se composant des briques (2, 3) creuses en verre avec interposition d'une cale (4) d'espacement qui rend étanche l'espace intermédiaire, **caractérisé en ce que** la cale (4) d'espacement est constituée d'au moins une entretoise (5a, 5b, 5c) individuelle constituée chacune sous la forme d'un profilé creux en forme de cadre, qui est pourvu d'un revêtement (9) étanche au gaz et à l'eau prévu sur son pourtour extérieur et, entre lui et les briques (2, 3) creuses en verre, est prévue respectivement une étanchéité (11) primaire.

2. Elément de construction suivant la revendication 1, **caractérisé en ce que** la cale (4) d'espacement est constituée de plusieurs entretoises (5a, 5b, 5c) individuelles, qui sont séparées les unes des autres par des feuilles (6a, 6b) intermédiaires ayant des revêtements (7a, 7b).

3. Elément de construction suivant la revendication 2, **caractérisé en ce que** l'on utilise des vitres au lieu des feuilles (6a, 6b).

4. Elément de construction suivant la revendication 2 ou 3, **caractérisé en ce que**, entre les diverses entretoises (5a, 5a=b, 5c) ainsi qu'entre elles et les briques (2, 3) creuses en verre, est prévue une étanchéité (11) primaire en butyl ou en un matériau analogue.

5. Elément de construction suivant la revendication 2, **caractérisé en ce qu'**une étanchéité (12) secondaire en silicone ou en matériau analogue est prévue à la fois à l'extérieur sur les entretoises (5a, 5b, 5c) individuelles et entre les bords (13) des briques en verre.

6. Elément de construction suivant l'une des revendications 1 à 5 précédentes, **caractérisé en ce que** la cavité (10) formée par la cale (4) d'espacement est remplie de gaz rare ou un vide y est produit.

7. Elément de construction suivant l'une des revendications 1 à 6 précédentes, **caractérisé en ce que**, vers l'extérieur de l'enceinte, sont utilisés du mortier ou du béton (14), tandis que, vers l'intérieur, sont utilisés du mortier isolant ou du béton (15) isolant constitué de billes de verre moussées à pores fermés, afin d'empêcher que le mortier ou le béton (14) puisse conduire de la chaleur de l'extérieur à l'intérieur du bâtiment ou inversement.

8. Elément de construction suivant la revendication 7, **caractérisé en ce que**, dans le mortier/béton (14) et/ou dans le mortier/béton (15) isolant, est prévue une armature (16) se trouvant dans le plan parallèlement à la surface de l'élément de construction, respectivement du plan de l'enceinte.

9. Elément de construction suivant la revendication 8, **caractérisé en ce que** des manchons d'ancrage peuvent être fixés à l'armature (16).

10. Elément de construction suivant la revendication 8, **caractérisé en ce que** l'armature (16) peut être fixée directement au bâtiment.
